# EUROPÄISCHE PATENTANMELDUNG

(11) **EP 4 015 181 A1**
(43) Veröffentlichungstag der Anmeldung: **22.06.2022**
(21) Anmeldenummer: 20215059.5
(22) Anmeldetag: 17.12.2020
(51) Int. Cl.: B29B 9/04, B29B 9/12, B29B 7/90, B32B 7/023, B29B 9/06, B29B 9/16, B29B 7/42, B29B 7/48

(54) **VERFAHREN ZUR IN SITU-ERZEUGUNG VON PIGMENTEN IN KUNSTSTOFF**

(71) Anmelder: Schlenk Metallic Pigments GmbH, 91154 Roth (DE)
(72) Erfinder: Seidl, Alois, 91186 Büchenbach (DE)
(74) Vertreter: Müller-Boré & Partner Patentanwälte PartG mbB

(57) **Zusammenfassung**

Verfahren zur Herstellung eines mit Pigmenten versehenen Kunststoffgranulats, umfassend die nachstehenden Schritte (i) bis (iii): (i) Bereitstellen einer Trägerfolie aus Kunststoff; (ii) Beschichten der Trägerfolie mit einer Einzelschicht aus einem Pigmentmaterial oder einem Schichtpaket aus mehreren Pigmentmaterialien; und (iii) Umformen der beschichteten Trägerfolie durch thermischmechanische Einwirkung in ein mit Pigmenten versehenes Kunststoffgranulat.

## Beschreibung

Die vorliegende Erfindung betrifft ein Verfahren zur Herstellung eines mit Pigmenten versehenen Kunststoffgranulats.

Kunststoffgranulat ist aufgrund seiner leichten Transportier- und Handhabbarkeit der typische Ausgangsstoff von thermoplastischen Kunststoffen in der kunststoffverarbeitenden Industrie, wo es beim Spritzgießen und bei anderen Umformverfahren in großem Maßstab zur Herstellung von Formkörpern eingesetzt wird. Soll der aus dem Kunststoffgranulat herzustellende Formkörper bestimmte optische oder anderweitig funktionale Eigenschaften aufweisen, wird das Kunststoffgranulat vorab üblicherweise durch das Einbringen von Pigmenten in die Kunststoffmatrix eingefärbt oder funktionalisiert. Als funktionale Eigenschaften sind insbesondere die thermische und/oder elektrische Leitfähigkeit, die Abschirmung bzw. Durchlässigkeit elektromagnetischer Wellen, Sicherheitsmerkmale wie sichtbare, unsichtbare und/oder forensische Merkmale, sowie die mechanische Verstärkung der Kunststoffmatrix zu nennen.

Für die Einfärbung oder Funktionalisierung des Kunststoffgranulats wird in der Regel ein Kunststoffrohmaterial mit Hilfe eines Extruders aufgeschmolzen und anschließend mit Pigmenten versehen. Hierbei wird zunächst ein Masterbatch erhalten. Dieses kann sodann zusammen mit nicht-eingefärbtem bzw. nicht-funktionalisiertem Kunststoffgranulat zwecks Verdünnung durch Spritzgießen oder durch ein anderes Umformverfahren mit Hilfe von Extrudern in eine vorgegebene Form gebracht werden.

Handelt es sich bei den eingesetzten Pigmenten um Effektpigmente, beispielsweise um Metalleffektpigmente oder um Perlglanzeffektpigmente, welche eine plättchenförmige Struktur aufweisen, so geht das Einbringen der Pigmente in die Kunststoffmatrix oftmals mit einer teilweisen Beschädigung (Deformation) bis hin zur vollständigen Zerstörung (Bruch) der Pigmente durch die im Extruder auftretenden Scherkräfte einher, da das Pigmentmaterial zu diesem Zeitpunkt noch nicht durch die Kunststoffmatrix geschützt ist. Dementsprechend lässt sich der gewünschte Effekt, also eine bestimmte optische oder anderweitig funktionale Eigenschaft, nicht in voller Qualität erzielen. Beispielhaft sind hier die Abnahme des Reflexionsvermögens und die Zunahme ungewünschter diffuser Streuung von Licht zu nennen, wie sie im Falle einer Beschädigung bzw. Zerstörung bei den vorstehend beschriebenen optischen Pigmenten auftreten können. Genauso kann es etwa bei funktionalen Pigmenten, wie zum Beispiel bei Kupferpigmenten, welche die thermische oder elektrische Leitfähigkeit des Kunststoffs erhöhen sollen, durch die Deformation oder den Bruch der Pigmente zu einer Störung der thermischen oder elektrischen Leitfähigkeit kommen. Das Ausmaß der Pigmentbeschädigung bzw. -zerstörung und die damit einhergehende Beeinträchtigung der jeweiligen optischen oder anderweitig funktionalen Eigenschaft nehmen dabei mit wachsendem Aspektverhältnis aus Teilchendurchmesser zu Teilchendicke der Pigmente zu. Um den gewünschten Effekt überhaupt erzielen zu können, müssen die Pigmente typischerweise ein Aspektverhältnis von mindestens 2:1, bevorzugt von mindestens 3:1, und mehr bevorzugt von mindestens 10:1 aufweisen.

Die Herstellung von Effektpigmenten ist in vielen Fällen sehr aufwändig. Bei Metalleffektpigmenten gibt es zum Beispiel eine Klasse von Aluminiumpigmenten, die durch physikalische Gasphasenabscheidung hergestellt und folglich auch als PVD-Aluminiumpigmente bezeichnet werden (PVD, engl, *physical vapor deposition*). Hierbei wird eine Trägerfolie, welche in der Regel aus Polyethylenterephthalat gebildet ist, mit einer Trennbeschichtung (engl. *release coat*) bedruckt und anschließend im Hochvakuum mit Aluminium bedampft, um so eine dünne Schicht aus Aluminium mit einer Dicke im Nanometerbereich auf der Trägerfolie zu erzeugen. Die Aluminiumschicht wird sodann unter Zuhilfenahme von Lösungsmitteln von der Trägerfolie bzw. von der darauf aufgebrachten Trennbeschichtung abgelöst und zu Plättchen zerkleinert. Diese lassen sich schließlich, wie vorstehend beschrieben, in eine Kunststoffmatrix einbringen.

Derartig eingefärbte bzw. funktionalisierte Kunststoffgranulate sind kommerziell erhältlich. Aufgrund des aufwändigen und damit kostenintensiven Herstellungsverfahrens sind sie jedoch entsprechend hochpreisig. Zudem leiden derartig eingefärbte bzw. funktionalisierte Kunststoffgranulate unter den vorstehend beschriebenen Nachteilen, welche auf die beim Einbringen in die Kunststoffmatrix auftretenden Scherkräfte, denen die Pigmente ausgesetzt sind, zurückgehen. Dies gilt nicht nur für Metalleffektpigmente und Perlglanzeffektpigmente, sondern auch für organische und anorganische Absorptionspigmente, sofern sie über eine Plättchenstruktur verfügen und damit teilweise eine Glanzwirkung erzielen, wie dies etwa bei Eisenoxid der Fall ist. In Anbetracht dessen besteht ein Bedarf an einer alternativen Einbringung von Pigmenten in die Kunststoffmatrix.

Der vorliegenden Erfindung liegt somit die Aufgabe zugrunde, ein Verfahren zur Herstellung eines mit Pigmenten versehenen Kunststoffgranulats bereitzustellen, wobei das Verfahren eine Beschädigung bzw. Zerstörung der Pigmente bei ihrem Einbringen in die Kunststoffmatrix vermeiden und darüber hinaus weniger kostenintensiv sein soll.

Die vorstehende Aufgabe wird durch die in den Ansprüchen gekennzeichneten Ausführungsformen der vorliegenden Erfindung gelöst.

So wird gemäß der vorliegenden Erfindung ein Verfahren zur Herstellung eines mit Pigmenten versehenen Kunststoffgranulats bereitgestellt, wobei das erfindungsgemäße Verfahren die nachstehenden Schritte (i) bis (iii) in der angegebenen Reihenfolge umfasst:
(i) Bereitstellen einer Trägerfolie aus Kunststoff;
(ii) Beschichten der Trägerfolie mit einer Einzelschicht aus einem Pigmentmaterial oder einem Schichtpaket aus mehreren Pigmentmaterialien; und
(iii) Umformen der beschichteten Trägerfolie durch thermisch-mechanische Einwirkung in ein mit Pigmenten versehenes Kunststoffgranulat.

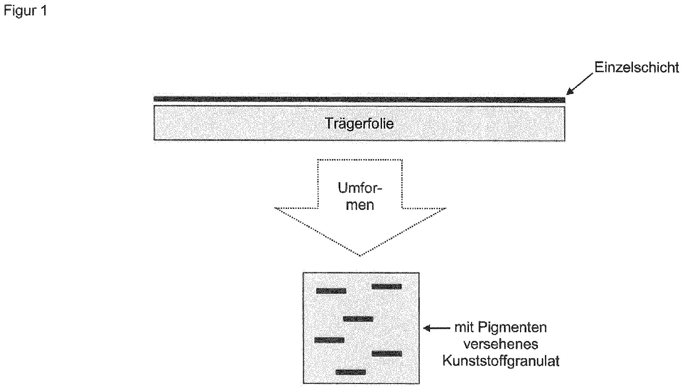

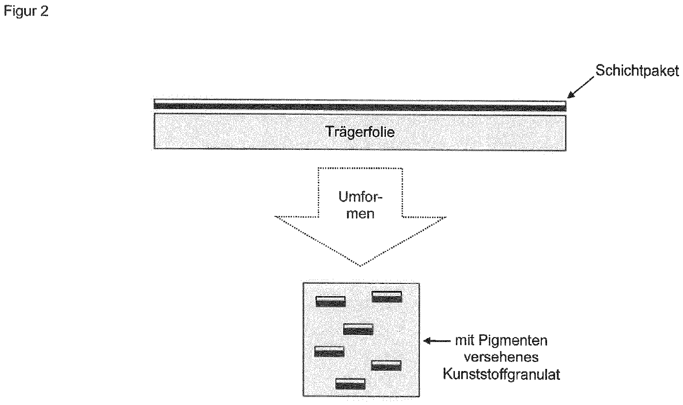

Das erfindungsgemäße Verfahren, welches in Figur 1 für das Beschichten mit einer Einzelschicht und in Figur 2 für das Beschichten mit einem Schichtpaket exemplarisch dargestellt ist, erlaubt die kostengünstige Herstellung eines mit Pigmenten versehenen Kunststoffgranulats, da auf eine Isolierung der Pigmente vor ihrem Einbringen in die Kunststoffmatrix verzichtet wird. Stattdessen werden die Pigmente im erfindungsgemäßen Verfahren zeitgleich, gewissermaßen *in situ,* beim Einbringen in die Kunststoffmatrix, welche von der Trägerfolie herrührt, erzeugt. Während der thermisch-mechanischen Einwirkung erweicht der Kunststoff der Trägerfolie, wobei vorliegend unter einem Erweichen des Kunststoffs auch ein Schmelzen des Kunststoffs verstanden wird. Die Einzelschicht bzw. das Schichtpaket löst sich infolgedessen von der Trägerfolie ab und wird aufgrund der hierbei auftretenden Scherkräfte zu Plättchen zerkleinert. Da die Pigmente bei ihrer Erzeugung unmittelbar von der Kunststoffmatrix umgeben sind und durch diese geschützt werden, sind die Pigmente im erfindungsgemäßen Verfahren in weitaus geringerem Maße den Scherkräften ausgesetzt, wodurch eine Deformation bzw. ein Bruch der Pigmente unterbleibt. Die Qualität des gewünschten Effekts lässt sich somit verbessern.

Im Folgenden wird das erfindungsgemäße Verfahren zur Herstellung eines mit Pigmenten versehenen Kunststoffgranulats näher beschrieben.

In Schritt (i) des erfindungsgemäßen Verfahrens wird eine Trägerfolie aus Kunststoff bereitgestellt. Die Trägerfolie ist gemäß der vorliegenden Erfindung nicht weiter eingeschränkt, solange sie aus einem Kunststoff, welcher sich zur Herstellung eines Kunststoffgranulats eignet, gebildet ist. Insofern handelt es sich bei dem Kunststoff der Trägerfolie um einen thermoplastischen Kunststoff, welcher durch Zufuhr von Wärme erweicht werden kann und sich hierdurch verformen und in eine vorgegebene Form bringen lässt. Da der Kunststoff der Trägerfolie zugleich der Kunststoff des späteren Granulats ist, wird der Kunststoff der Trägerfolie in Anbetracht des beabsichtigten Einsatzzwecks des mit Pigmenten versehenen Kunststoffgranulats gewählt.

In einer Ausführungsform der vorliegenden Erfindung ist die Trägerfolie aus Polyethylenterephthalat (PET) gebildet. Aufgrund seiner hervorragenden Beständigkeit gegenüber den unterschiedlichsten Chemikalien wird PET in vielen Bereichen eingesetzt, etwa zur Herstellung von Lebensmittelbehältern, insbesondere Flaschen, Textilfasern sowie Folien jeglicher Art. In all diesen Einsatzbereichen kann eine bestimmte optische oder anderweitig funktionale Eigenschaft gewünscht sein. Hierzu bedarf es der Einbringung von Pigmenten in die Kunststoffmatrix, was mit dem erfindungsgemäßen Verfahren auf vorteilhafte Weise möglich ist. Anstelle von Polyethylenterephthalat kann die Trägerfolie auch aus anderen Polyestern gebildet sein. Abgesehen von Polyestern lassen sich auch Polyamide, Polyurethane und halogenierte oder unhalogenierte Polyolefine für den Kunststoff der Trägerfolie nennen, wobei auch entsprechende Copolymere hiervon für den Kunststoff der Trägerfolie in Frage kommen. Insbesondere kann die Trägerfolie aus Polyethylen, Polypropylen, Polyvinylchlorid, Polystyrol, Polycarbonat, Polylactid, Celluloseacetat, Cellulosehydrat, Polyethylenterephthalat, Polybutylenterephthalat, Polymethylmethacrylat, Polyacetal, Fluorpolymeren, Silikonen und Acrylnitril-Butadien-Styrol-Copolymer sowie aus entsprechenden Gemischen hiervon gebildet sein, ohne jedoch auf eines der vorstehenden Polymere beschränkt zu sein.

Was die Dicke der Trägerfolie anbelangt, ist die vorliegende Erfindung ebenfalls nicht weiter eingeschränkt. Typischerweise weist die Trägerfolie eine Dicke im Bereich von 1 µm bis 800 µm, bevorzugt im Bereich von 2 µm bis 500 µm, mehr bevorzugt im Bereich von 5 µm bis 150 µm, und noch mehr bevorzugt im Bereich von 6 µm bis 60 µm auf. Da sich der Kunststoff der Trägerfolie im späteren Granulat wiederfindet, kann durch die Dicke der Trägerfolie der Volumenanteil des Kunststoffs gegenüber dem Volumenanteil der Pigmente im späteren Granulat eingestellt werden. Trägerfolien, deren Dicke in dem hier angegebenen Bereich liegt, sind für eine Vielzahl von Kunststoffen, darunter auch PET, kommerziell erhältlich.

In Schritt (ii) des erfindungsgemäßen Verfahrens wird die Trägerfolie mit einer Einzelschicht aus einem Pigmentmaterial oder einem Schichtpaket aus mehreren Pigmentmaterialien beschichtet. Aus der Einzelschicht bzw. dem Schichtpaket gehen die Pigmente im späteren Granulat hervor. Folglich entspricht die Zusammensetzung der Einzelschicht bzw. des Schichtpakets der Zusammensetzung der Pigmente im späteren Granulat. Die Anzahl der Schichten, welche im Falle der Einzelschicht gleich eins ist und im Falle des Schichtpakets gleich zwei oder mehr ist, sowie die hierfür verwendeten Pigmentmaterialien hängen naturgemäß vom gewünschten Effekt, also von der optischen oder anderweitig funktionalen Eigenschaft, die das spätere Granulat aufweisen soll, ab. Gemäß der vorliegenden Erfindung sind weder die Anzahl der Schichten noch die hierfür verwendeten Pigmentmaterialien in irgendeiner Weise eingeschränkt, sofern ein Beschichten der Trägerfolie hiermit möglich ist.

Durch Beschichten der Trägerfolie mit einer Einzelschicht aus einem Pigmentmaterial lassen sich beispielsweise Metalleffektpigmente erzeugen. Durch Beschichten der Trägerfolie mit einem Schichtpaket aus mehreren Pigmentmaterialien lassen sich beispielsweise Perlglanzeffektpigmente erzeugen. Im Vergleich zu Metalleffektpigmenten weisen Perlglanzeffektpigmente einen Kern-Schale-Aufbau auf, wodurch diese neben Reflexionseffekten auch noch Interferenzeffekte zeigen.

Je nach beabsichtigtem Einsatzzweck des mit Pigmenten versehenen Kunststoffgranulats wählt ein Fachmann routinemäßig die Anzahl der Schichten, einschließlich der jeweiligen Schichtdicken, sowie die hierfür verwendeten Pigmentmaterialien aus. Gleiches gilt für die Wahl des Beschichtungsverfahrens. Abhängig vom Pigmentmaterial kann das Beschichten der Trägerfolie in Schritt (ii) durch ein Verfahren, ausgewählt aus der Gruppe, bestehend aus physikalischer Gasphasenabscheidung, chemischer Gasphasenabscheidung, nasschemischer Abscheidung, Auflaminieren, Bedrucken, Aufpolymerisieren und Prägen, erfolgen, ohne jedoch auf eines der hier angegebenen Verfahren beschränkt zu sein.

Handelt es sich bei dem Pigmentmaterial beispielsweise um ein Metall, kann mit Hilfe von physikalischer Gasphasenabscheidung, etwa mittels Sputtern oder thermischer Verdampfung im Hochvakuum, beschichtet werden. Handelt es sich bei dem Pigmentmaterial beispielsweise um ein Metalloxid, kann neben Sputtern im Hochvakuum auch mit Hilfe von chemischer Gasphasenabscheidung oder mit Hilfe von nasschemischer Abscheidung, etwa mittels Sol-Gel-Prozess, beschichtet werden. Chemische Gasphasenabscheidung eignet sich, wenn die Trägerfolie zum Beispiel mit Eisenoxid beschichtet werden soll, während sich nasschemische Abscheidung eignet, wenn die Trägerfolie zum Beispiel mit Siliziumdioxid beschichtet werden soll.

Auch kann die Trägerfolie durch Auflaminieren dünner Folien, welche das Pigmentmaterial enthalten, beschichtet werden. Ferner ist ein Beschichten der Trägerfolie durch Bedrucken mit einem Lack möglich. Letzterer enthält das Pigmentmaterial in dispergierter Form. Weiterhin lassen sich Schichten durch Vernetzung geeigneter Ausgangsstoffe auf die Trägerfolie aufpolymerisieren. Da der aufpolymerisierte Kunststoff eine vernetzte Struktur aufweist und insofern auch als polymeres Vernetzungsprodukt bezeichnet wird, löst sich dieser im erweichten Kunststoff der Trägerfolie im anschließenden Schritt (iii) nicht auf. Im Falle des Aufpolymerisierens lässt sich der gewünschte Effekt beispielsweise dadurch erzielen, dass sich der aufpolymerisierte Kunststoff in seinem Brechungsindex vom Kunststoff der Trägerfolie unterscheidet. Abschließend soll noch auf die Möglichkeit hingewiesen werden, dass holographische Schichten durch Prägen einer bereits mit einem polymeren Vernetzungsprodukt beschichteten Trägerfolie und anschließendes Metallisieren im Hochvakuum erhalten werden können.

Nachstehend sind mögliche Pigmentmaterialien angegeben, wobei diese je nach Einsatzzweck entweder Teil einer Einzelschicht oder Teil eines Schichtpakets sein können. Abhängig vom jeweiligen Pigmentmaterial wählt ein Fachmann ein geeignetes Beschichtungsverfahren, wie vorstehend beschrieben, aus. Grundsätzlich ist auch innerhalb einer Schicht die Kombination verschiedener Pigmentmaterialien möglich. Typische Schichtdicken liegen je nach Einsatzzweck im Bereich von 1 nm bis 1000 µm, wobei vorliegend unter der Schichtdicke die Dicke einer einzigen Schicht verstanden wird.

### 1) Schichten, welche eine Vollreflexion von Licht ermöglichen:

Als vollreflektierende Pigmentmaterialien kommen hier beispielsweise Metalle wie Aluminium, Silber, Kupfer, Zinn, Zink, Gold, Platin, Chrom, Vanadium, Eisen, Titan, Zirkonium, Nickel, Silizium, Magnesium, Mangan, Kobalt, Tantal, Molybdän und Lanthanoide sowie entsprechende Legierungen hiervon in Frage. Legierungen, welche vorliegend verwendet werden können, sind insbesondere solche aus Kupfer und Zinn (Bronze), solche aus Kupfer und Zink (Messing), Stahl und Edelstahl. Darüber hinaus sind hier der Vollständigkeit halber noch Metalle wie Palladium, Ruthenium, Blei, Iridium, Gallium, Beryllium, Wolfram, Strontium, Lithium, Bismut, Niob, Tantal, Rhenium, Osmium und Rhodium zu nennen.

### 2) Schichten, welche eine Absorption von Licht ermöglichen:

Als absorbierende Pigmentmaterialien sind hier beispielhaft Eisencyanide, Eisenoxide, Chromoxide, Bismutoxide, Bismutvanadate sowie Ultramarine genannt.

### 3) Schichten, welche durch Zusammenwirken unterschiedlicher Brechungsindizes eine Interferenz ermöglichen:

Als Pigmentmaterialien mit einem Brechungsindex n ≤ 1,8, d.h. als niedrigbrechende Pigmentmaterialien, kommen hier beispielsweise SiO₂, SiO(OH)₂, Al₂O₃, AIO(OH), B₂O₃, MgF₂, MgSiO₃, MgO, MnO₂, SnO₂, GeO₂, Aluminiumphosphate und Borosilikate in Frage.

Als Pigmentmaterialien mit einem Brechungsindex n > 1,8, d.h. als hochbrechende Pigmentmaterialien, kommen hier beispielsweise TiO₂, Ti₂O₃, ZrO₂, SiO, CeO₂, Ce₂O₃, HfO₂, Pr₂O₃, Y₂O₃, Ta₂O₅, ZnO, ZnS, SnO, BiOCI, FeO, Fe₂O₃, CoO, Cr₂O₃, NiO, CuO, Cu₂O, V₂O₅ und Sb₂O₃ in Frage.

Auch lassen sich als niedrigbrechende und hochbrechende Pigmentmaterialien polymere Vernetzungsprodukte, welche aus geeigneten Ausgangsstoffen erhalten werden, verwenden. Beispielhaft sind hier Vinylacetat, Celluloseacetatbutyrat, Methylmethacrylat-Styrol-Copolymere, N-Vinylpyrrolidon, Acrylamide, Acrylate wie Vinylacrylat, Phenoxyethylacrylat, Trimethylolpropantriacrylat und Trimethylolpropanethoxytriacrylat, Urethanacrylate, Urethanmethacrylate sowie Epoxide genannt. Die Vernetzung kann hierbei über eine freie Doppelbindung, welche beispielsweise von der Acrylgruppe herrührt, erfolgen. Bei Bedarf können die vorstehenden Ausgangsstoffe mit geeigneten funktionellen Gruppen wie -OH, -NH₂ oder -CF₃ substituiert sein, ohne jedoch auf eine der hier genannten funktionellen Gruppen beschränkt zu sein.

### 4) Schichten, welche nach dem Fabry-Perot-Prinzip die Erzeugung winkelabhängiger Farben ermöglichen:

Die Pigmentmaterialien sind hier zwingend Teil eines Schichtpakets. Die Schichtabfolge beinhaltet als äußere Schicht jeweils eine dünne semitransparente Schicht aus Metall, beispielsweise Chrom, Aluminium und Silber, und als innere Schicht jeweils eine Schicht aus einem Dielektrikum, beispielsweise MgF₂, SiO₂ und die unter 3) genannten polymeren Vernetzungsprodukte, wobei ein Metall, beispielsweise die unter 1) genannten Metalle, als lichtundurchlässiger Reflektorkern von den beiden inneren Schichten umgeben ist. Beispielhaft sind hier als Schichtabfolge Chrom / MgF₂ / Aluminium / MgF₂ / Chrom, Chrom / SiO₂ / Aluminium / SiO₂ / Chrom, Aluminium / SiO₂ / Aluminium / SiO₂ / Aluminium und Chrom / polymeres Vernetzungsprodukt / Aluminium / polymeres Vernetzungsprodukt / Chrom genannt. Die als äußere Schicht jeweils vorgesehene dünne semitransparente Schicht aus Metall weist typischerweise eine Dicke von 5 nm oder weniger auf.

### 5) Schichten aus flüssigkristallinen Polymeren, holographische Schichten, diffraktive Schichten sowie Schichten mit photonischen Kristallen:

Schichten aus flüssigkristallinen Polymeren führen beispielsweise zu cholesterischen Effekten.

Bei holographischen Schichten wird zunächst eine aufpolymerisierte Schicht aus Kunststoff geprägt und anschließend mit einer reflektierenden Schicht aus Metall beschichtet. Für die aufpolymerisierte Schicht aus Kunststoff lassen sich die unter Punkt 3) genannten polymeren Vernetzungsprodukte verwenden. Für die reflektierende Schicht aus Metall kommen beispielsweise Chrom, Aluminium und Silber in Frage.

Diffraktive Schichten zeichnen sich dadurch aus, dass eine Schicht aus einem Dielektrikum, beispielsweise MgF₂, SiO₂ und die unter 3) genannten polymeren Vernetzungsprodukte, auf einer dünnen semitransparenten Schicht aus Metall, beispielsweise Chrom, Aluminium und Silber, abgeschieden ist. Die dünne semitransparente Schicht aus Metall wird hierbei durch das Dielektrikum gestützt. Die diffraktiven Mikrostrukturen, welche für die diffraktiven Schichten kennzeichnend sind, lassen sich durch Strukturierung des Dielektrikums oder der Trägerfolie mittels Prägung oder anderer Verfahren erzeugen.

Schichten mit photonischen Kristallen beinhalten Mikrostrukturen aus Halbleitern, Gläsern oder Polymeren, welche in der Lage sind, die Ausbreitung von Licht zu steuern. Beispielhaft sind hier sphärisches Polystyrol oder Teilchen aus SiO₂ in regelmäßiger Anordnung genannt.

Geeigneterweise kann vor dem Schritt (ii) eine Trennbeschichtung auf die Trägerfolie aufgebracht werden. Dies ist insbesondere dann hilfreich, wenn die Einzelschicht bzw. das Schichtpaket zu stark an der Oberfläche der Trägerfolie haftet, was im anschließenden Schritt (iii) die Erzeugung der Pigmente erschweren würde. Ein zu starkes Haften hätte zudem vergleichsweise geringe Teilchendurchmesser zur Folge, da die Einzelschicht bzw. das Schichtpaket zu stark zerkleinert würde. Die Trennbeschichtung lässt sich durch Bedrucken der Trägerfolie auf diese aufbringen, was hinlänglich aus der eingangs erwähnten Herstellung von PVD-Aluminiumpigmenten bekannt ist. Was das Material anbelangt, unterliegt die Trennbeschichtung keiner besonderen Einschränkung, solange es sich von dem Material der Trägerfolie unterscheidet. So kann die Trennbeschichtung beispielsweise aus Polymeren, Harzen, Lacken, Fetten und Wachsen oder aus Gemischen hiervon gebildet sein.

Beispielhafte Polymere für die Trennbeschichtung sind Polyvinylchlorid, Polystyrol sowie Copolymere von Styrol, Polyvinylpyrrolidon, Polyvinylalkohol, Polyvinylether wie Polyvinylethylether, Polyvinylester wie Polyvinylacetat, Polyvinylacetale wie Polyvinylbutyral, Polyacrylate wie Polyethylacrylat sowie Cellulosederivate wie Celluloseacetat, Celluloseacetatpropionat, Celluloseacetatbutyrat und Cellulosenitrat, ohne jedoch auf eines der vorstehenden Polymere beschränkt zu sein. So lassen sich für die Trennbeschichtung grundsätzlich auch andere Polyester, Polyamide, Polyurethane und halogenierte oder unhalogenierte Polyolefine verwenden. Auch können für die Trennbeschichtung Silikone oder Silane verwendet werden.

Beispielhafte Harze für die Trennbeschichtung sind Kohlenwasserstoffharze, Acrylatharze, Epoxidharze, Keton- und Aldehydharze, Amido- und Aminoharze, Phenolharze sowie Alkydharze, ohne jedoch auf eines der vorstehenden Harze beschränkt zu sein.

Grundsätzlich lassen sich für die Trennbeschichtung auch Lacke verwenden. Diese enthalten geeignete Monomere bzw. Monomergemische, welche mit Hilfe von UV-Strahlung polymerisiert werden können.

In einer Ausführungsform der vorliegenden Erfindung wird die Trennbeschichtung einer Strukturierung unterzogen. Hierdurch lässt sich sicherstellen, dass es im anschließenden Schritt (iii) zu einer homogenen Erzeugung der Pigmente kommt, da aufgrund der Strukturierung der Trennbeschichtung ein ungeordnetes Zerkleinern der Einzelschicht bzw. des Schichtpakets unterbunden werden kann. Dies kommt wiederum der Qualität des gewünschten Effekts zugute.

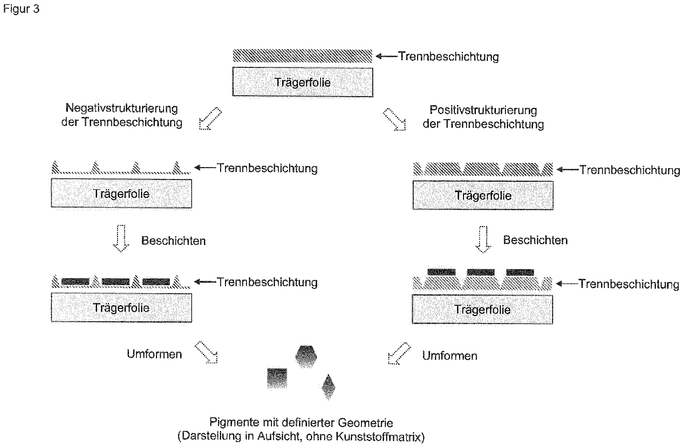

Die Strukturierung der Trennbeschichtung kann beispielsweise mit Hilfe einer Walze erfolgen. Hierbei werden bestimmte Muster, entweder Vertiefungen oder Erhöhungen, in die Trennbeschichtung geprägt. In diesen Vertiefungen bzw. auf diesen Erhöhungen findet sodann das Beschichten statt, wie in Figur 3 veranschaulicht. Im Falle von Vertiefungen spricht man sinngemäß auch von einer Negativstrukturierung der Trennbeschichtung, während man im Falle von Erhöhungen sinngemäß auch von einer Positivstrukturierung der Trennbeschichtung spricht. Da die Gestalt der Strukturierung auf die Pigmente übertragen wird, lassen sich auf diese Weise Pigmente mit definierter Geometrie erzeugen.

Um den Volumenanteil der Pigmente im späteren Granulat zu erhöhen, kann die Trägerfolie in Schritt (ii) beidseitig beschichtet werden. Zwar kann der Volumenanteil der Pigmente auch indirekt über die Dicke der Trägerfolie eingestellt werden. Da die Trägerfolie aus Kunststoff jedoch aus Stabilitätsgründen nicht beliebig dünn gewählt werden kann, ist dies allerdings nur bis zu einem gewissen Grad möglich. Für das beidseitige Beschichten gelten die vorstehenden Ausführungen, wie sie für das Beschichten in Schritt (ii) allgemein angegeben sind, in gleicher Weise.

Alternativ oder zusätzlich zum beidseitigen Beschichten der Trägerfolie ist eine Ausführungsform denkbar, bei der vor dem Schritt (iii) eine Trennbeschichtung auf die bereits beschichtete Trägerfolie aufgebracht wird und hierauf erneut beschichtet wird, was sich grundsätzlich beliebig oft wiederholen lässt. Ein und dieselbe Trägerfolie kann so mit einer Vielzahl von gleich- oder verschiedenartigen Einzelschichten bzw. Schichtpaketen beschichtet werden. Auf diese Weise lässt sich nicht nur der Volumenanteil der Pigmente im späteren Granulat erhöhen, auch ist es hierdurch möglich, dass das spätere Granulat mehr als eine optische oder anderweitig funktionale Eigenschaft aufweist. Was das Beschichten in dieser Ausführungsform anbelangt, gelten die vorstehenden Ausführungen, wie sie für das Beschichten in Schritt (ii) allgemein angegeben sind, ebenfalls in gleicher Weise. Selbiges gilt auch für die Trennbeschichtung in dieser Ausführungsform.

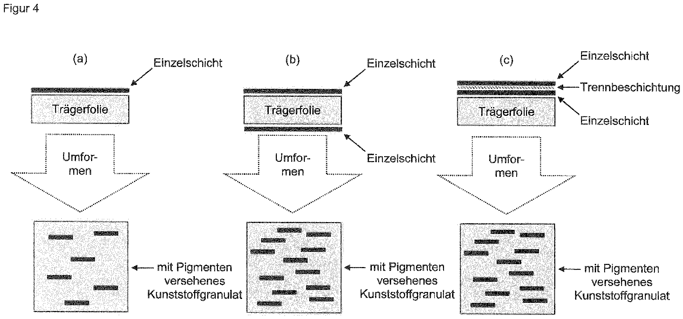

Figur 4 veranschaulicht zusammenfassend, wie sich der Volumenanteil der Pigmente im späteren Granulat durch beidseitiges Beschichten, oder indem eine Trennbeschichtung auf die bereits beschichtete Trägerfolie aufgebracht wird und hierauf erneut beschichtet wird, erhöhen lässt.

In Schritt (iii) des erfindungsgemäßen Verfahrens wird die beschichtete Trägerfolie durch thermisch-mechanische Einwirkung in ein mit Pigmenten versehenes Kunststoffgranulat umgeformt. Durch die thermisch-mechanische Einwirkung und das hierdurch bedingte Erweichen des Kunststoffs der Trägerfolie löst sich die Einzelschicht bzw. das Schichtpaket von der Trägerfolie ab und wird aufgrund der hierbei auftretenden Scherkräfte zu Plättchen zerkleinert. Die so erzeugten Pigmente werden durch die sie umgebende Kunststoffmatrix aus dem erweichten Kunststoff der Trägerfolie unmittelbar vor einer Beschädigung bzw. Zerstörung durch die Scherkräfte geschützt.

Zweckmäßigerweise kann das Umformen in Schritt (iii) durch Extrusion mit anschließendem Formen, beispielsweise Schneiden, des Extrudats erfolgen. Während der Extrusion findet der notwendige Energieeintrag statt, um den Kunststoff der Trägerfolie zu erweichen, wodurch sich die Einzelschicht bzw. das Schichtpaket von der Trägerfolie ablöst und aufgrund der hierbei auftretenden Scherkräfte zu Plättchen zerkleinert wird. Das Extrudat, welches die so erzeugten Pigmente mit der sie umgebenden Kunststoffmatrix enthält, lässt sich sodann durch Formen in ein mit Pigmenten versehenes Kunststoffgranulat überführen. Das erfindungsgemäße Verfahren ist jedoch, was das Umformen anbelangt, nicht auf die hier angegebene Umformart beschränkt.

Falls erforderlich, kann die beschichtete Trägerfolie vor dem Schritt (iii) einer makroskopischen Zerkleinerung, beispielsweise einem Häckseln oder Mahlen, unterzogen werden. Hierdurch wird das eigentliche Umformen in Schritt (iii) vereinfacht. Eine makroskopische Zerkleinerung ist insbesondere dann sinnvoll, wenn sich die beschichtete Trägerfolie aufgrund ihrer Größe nicht ohne weiteres extrudieren lässt.

Da die in Schritt (iii) erzeugten Pigmente aufgrund der sie umgebenden Kunststoffmatrix weder deformieren noch brechen, behalten diese ihre plättchenförmige Struktur, welche zur Erzielung des gewünschten Effekts notwendig ist, bei. So weisen die Pigmente in dem mit Pigmenten versehenen Kunststoffgranulat, welches mit dem erfindungsgemäßen Verfahren erhältlich ist, ein Aspektverhältnis von Teilchendurchmesser zu Teilchendicke von mindestens 2:1, bevorzugt von mindestens 3:1, und mehr bevorzugt von mindestens 10:1 auf.

Bei der Teilchendicke der Pigmente, welche für die Berechnung des Aspektverhältnisses heranzuziehen ist, handelt es sich um die durchschnittliche Dicke, welche als arithmetisches Zahlenmittel aller gemessenen Dicken zu verstehen ist. Die Teilchendicke ist hier der Mittelwert aus mindestens 200 Messungen unterschiedlicher Pigmente und wird durch Ausmessen auf Grundlage transmissionselektronenmikroskopischer (TEM) Aufnahmen ermittelt. Grundsätzlich entspricht die Teilchendicke der Pigmente der Dicke der Einzelschicht bzw. der Dicke des Schichtpakets, mit der bzw. dem die Trägerfolie in Schritt (ii) beschichtet wird.

Bei dem Teilchendurchmesser der Pigmente, welcher für die Berechnung des Aspektverhältnisses heranzuziehen ist, handelt es sich um den dso. Dieser gibt den Wert an, bei dem 50% der Pigmente aus einer Stichprobe kleiner sind als der angegebene Wert. Als Stichprobe dienen auch hier mindestens 200 Messungen unterschiedlicher Pigmente. Die Ermittlung des d₅₀ erfolgt durch Ausmessen auf Grundlage von Laserbeugung.

Wie aus den vorstehenden Ausführungen ersichtlich wird, erfolgt gemäß der vorliegenden Erfindung die Herstellung des mit Pigmenten versehenen Kunststoffgranulats ohne den Einsatz von Lösungsmitteln. Im Gegensatz zu den im Stand der Technik etablierten Verfahren, in denen die Pigmente von der Trägerfolie mit Hilfe von Lösungsmitteln abgelöst werden, um diese zu isolieren, kommt das erfindungsgemäße Verfahren gänzlich ohne den Einsatz von Lösungsmitteln aus. Nicht zuletzt aus diesem Grund ist das erfindungsgemäße Verfahren besonders umweltverträglich.

Wie bereits eingangs erwähnt, bedarf es im erfindungsgemäßen Verfahren keiner Isolierung der Pigmente. Da diese *in situ* bei der Herstellung des mit Pigmenten versehenen Kunststoffgranulats entstehen, werden die Pigmente unmittelbar durch die sie umgebende Kunststoffmatrix geschützt. Hierdurch wird die Qualität des gewünschten Effekts, also einer bestimmten optischen oder anderweitig funktionalen Eigenschaft, die mit dem Einbringen der Pigmente in die Kunststoffmatrix erzielt werden soll, signifikant verbessert. Vorteilhafterweise eignet sich das erfindungsgemäße Verfahren auch zur Herstellung von mit Pigmenten versehenen Kunststoffgranulaten, welche durch die im Stand der Technik etablierten Verfahren nicht hergestellt werden können, da die Pigmente hierfür beispielsweise zu dünn oder zu instabil sind.

### Figurenbeschreibung

Figur 1 zeigt das erfindungsgemäße Verfahren, wobei das Beschichten mit einer Einzelschicht erfolgt.
Figur 2 zeigt das erfindungsgemäße Verfahren, wobei das Beschichten mit einem Schichtpaket aus zwei Schichten erfolgt.
Figur 3 zeigt das erfindungsgemäße Verfahren, wobei das Beschichten auf einer Trennbeschichtung, welche einer Negativstrukturierung (linke Seite) bzw. einer Positivstrukturierung (rechte Seite) unterzogen worden ist, erfolgt.
Figur 4 zeigt das erfindungsgemäße Verfahren, wobei das Beschichten (a) mit einer Einzelschicht, (b) beidseitig mit einer Einzelschicht, und (c) mit zwei Einzelschichten und einer dazwischen angeordneten Trennbeschichtung erfolgt.
Figur 5 zeigt eine rasterelektronenmikroskopische (REM) Aufnahme des im nachstehenden Beispiel erhaltenen, mit Aluminiumpigmenten versehenen Kunststoffgranulats im Längsschnitt.

### Beispiel

Das nachstehende Beispiel dient der weiteren Erläuterung der vorliegenden Erfindung, ohne jedoch auf dieses beschränkt zu sein.

Eine Trägerfolie aus PET in Form einer Rolle wurde im Hochvakuum mit Aluminium beschichtet, so dass auf der Trägerfolie eine Schicht aus Aluminium mit einer optischen Dichte (OD) von 1,4, entsprechend einer Dicke von etwa 25 nm, erhalten wurde. Die mit Aluminium beschichtete Trägerfolie wurde sodann einer makroskopischen Zerkleinerung unterzogen und durch thermisch-mechanische Einwirkung in ein mit Aluminiumpigmenten versehenes Kunststoffgranulat umgeformt. Das Umformen erfolgte durch Extrusion mit anschließendem Formen des Extrudats. Das mit Aluminiumpigmenten versehene Kunststoffgranulat zeigte einen hohen metallischen Glanz und damit den gewünschten Metalleffekt, welcher durch die Aluminiumpigmente in der Kunststoffmatrix hervorgerufen wird.

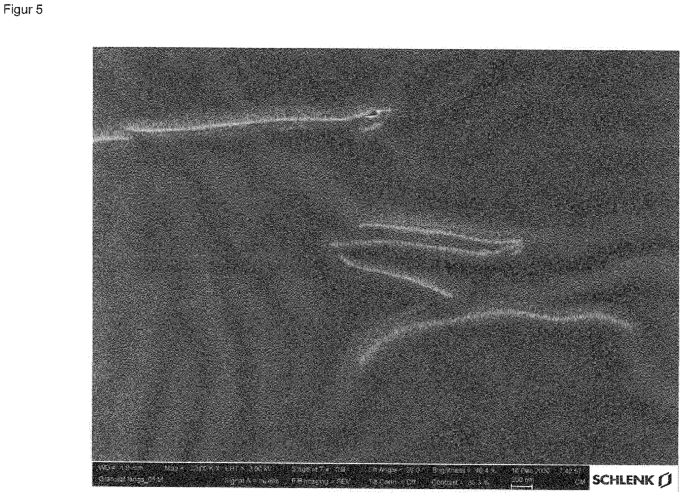

Figur 5 veranschaulicht, dass die Aluminiumpigmente, welche keine nennenswerten Deformationen oder gar Brüche aufweisen, vollständig von der Kunststoffmatrix aus PET umgeben sind. Bei der gewellten Struktur der Kunststoffmatrix, wie sie in Figur 5 zu sehen ist, handelt es sich um ein durch das lonenpolieren beim Erstellen der REM-Aufnahme bedingtes Artefakt. Der in Figur 5 dargestellte Maßstabsbalken entspricht einer Länge von 200 nm.

Zur Weiterverarbeitung kann das derart erhaltene Granulat beispielsweise zu 8%, 3% bzw. 1 % mit reinem, nicht eingefärbtem PET Granulat abgemischt werden. Aus einer solchen Abmischung können dann zum Beispiel mittels Spritzgussverfahren Flaschen geblasen werden, die sich durch exzellente hochwertige metallische Effekte bei sehr geringen Pigmentkonzentrationen auszeichnen.

## Patentansprüche

1. Verfahren zur Herstellung eines mit Pigmenten versehenen Kunststoffgranulats, umfassend die nachstehenden Schritte (i) bis (iii):
(i) Bereitstellen einer Trägerfolie aus Kunststoff;
(ii) Beschichten der Trägerfolie mit einer Einzelschicht aus einem Pigmentmaterial oder einem Schichtpaket aus mehreren Pigmentmaterialien; und
(iii) Umformen der beschichteten Trägerfolie durch thermisch-mechanische Einwirkung in ein mit Pigmenten versehenes Kunststoffgranulat.

2. Herstellungsverfahren nach Anspruch 1, wobei die Trägerfolie aus einem Kunststoff, ausgewählt aus der Gruppe, bestehend aus Polyethylen, Polypropylen, Polyvinylchlorid, Polystyrol, Polycarbonat, Polylactid, Celluloseacetat, Cellulosehydrat, Polyethylenterephthalat, Polybutylenterephthalat, Polymethylmethacrylat, Polyacetal, Fluorpolymeren, Silikonen und Acrylnitril-Butadien-Styrol-Copolymer, oder aus Gemischen hiervon gebildet ist.

3. Herstellungsverfahren nach Anspruch 1 oder 2, wobei die Trägerfolie eine Dicke im Bereich von 1 µm bis 800 µm aufweist.

4. Herstellungsverfahren nach einem der Ansprüche 1 bis 3, wobei das Beschichten in Schritt (ii) durch ein Verfahren, ausgewählt aus der Gruppe, bestehend aus physikalischer Gasphasenabscheidung, chemischer Gasphasenabscheidung, nasschemischer Abscheidung, Auflaminieren, Bedrucken, Aufpolymerisieren und Prägen, erfolgt.

5. Herstellungsverfahren nach einem der Ansprüche 1 bis 4, wobei die Trägerfolie in Schritt (ii) mit einer Einzelschicht bzw. einem Schichtpaket aus vollreflektierenden Pigmentmaterialien, absorbierenden Pigmentmaterialien, niedrigbrechenden Pigmentmaterialien, hochbrechenden Pigmentmaterialien oder einer Kombination hiervon beschichtet wird oder die Trägerfolie in Schritt (ii) mit einer Einzelschicht bzw. einem Schichtpaket aus flüssigkristallinen Polymeren, holographischen Schichten, diffraktiven Schichten oder Schichten mit photonischen Kristallen beschichtet wird.

6. Herstellungsverfahren nach einem der Ansprüche 1 bis 4, wobei die Trägerfolie in Schritt (ii) mit einem Schichtpaket beschichtet wird und das Schichtpaket aus einer Schichtabfolge, ausgewählt aus der Gruppe, bestehend aus Chrom / MgF₂ /Aluminium / MgF₂ / Chrom, Chrom / SiO₂ /Aluminium / SiO₂ / Chrom, Aluminium / SiO₂ / Aluminium / SiO₂ / Aluminium und Chrom / polymeres Vernetzungsprodukt /Aluminium / polymeres Vernetzungsprodukt / Chrom, gebildet ist.

7. Herstellungsverfahren nach einem der Ansprüche 1 bis 6, wobei vor dem Schritt (ii) eine Trennbeschichtung auf die Trägerfolie aufgebracht wird.

8. Herstellungsverfahren nach Anspruch 7, wobei die Trennbeschichtung aus Polymeren, Harzen, Lacken, Fetten und Wachsen oder aus Gemischen hiervon gebildet ist.

9. Herstellungsverfahren nach Anspruch 7 oder 8, wobei die Trennbeschichtung einer Strukturierung unterzogen wird.

10. Herstellungsverfahren nach einem der Ansprüche 1 bis 9, wobei die Trägerfolie in Schritt (ii) beidseitig beschichtet wird.

11. Herstellungsverfahren nach einem der Ansprüche 1 bis 10, wobei vor dem Schritt (iii) eine Trennbeschichtung auf die bereits beschichtete Trägerfolie aufgebracht wird und hierauf erneut beschichtet wird.

12. Herstellungsverfahren nach einem der Ansprüche 1 bis 11, wobei das Umformen in Schritt (iii) durch Extrusion mit anschließendem Formen des Extrudats erfolgt.

13. Herstellungsverfahren nach einem der Ansprüche 1 bis 12, wobei die beschichtete Trägerfolie vor dem Schritt (iii) einer makroskopischen Zerkleinerung unterzogen wird.

14. Herstellungsverfahren nach einem der Ansprüche 1 bis 13, wobei die Pigmente in dem mit Pigmenten versehenen Kunststoffgranulat ein Aspektverhältnis aus Teilchendurchmesser zu Teilchendicke von mindestens 2:1, bevorzugt von mindestens 3:1, und mehr bevorzugt von mindestens 10:1 aufweisen.

15. Herstellungsverfahren nach einem der Ansprüche 1 bis 14, wobei die Herstellung des mit Pigmenten versehenen Kunststoffgranulats ohne den Einsatz von Lösungsmitteln erfolgt.
